# EUROPÄISCHE PATENTSCHRIFT

(11) **EP 0 396 045 B1**
(45) Veröffentlichungstag und Bekanntmachung des Hinweises auf die Patenterteilung: **23.08.1995**
(21) Anmeldenummer: 90108087.9
(22) Anmeldetag: 27.04.1990
(51) Int. Cl.: H04N 5/217

(54) **Einrichtung zur Bildaufnahme**
Image pickup device
Dispositif de prise d'image

(30) Priorität: 03.05.1989 DE 3914575
(43) Veröffentlichungstag der Anmeldung: 07.11.1990
(73) Patentinhaber: ROBERT BOSCH GMBH, 70442 Stuttgart (DE)
(72) Erfinder: Bock, Gerd, Dr., D-3200 Hildesheim (DE)
(74) Vertreter: Friedmann, Jürgen, Dr.-Ing.

(56) Entgegenhaltungen:
- GB-A- 1 526 801
- GB-A- 2 195 885
- PATENT ABSTRACTS OF JAPAN, Band 7, Nr. 72 (E-166)[1217], 25. März 1983; & JP-A-57 212 874
- PATENT ABSTRACTS OF JAPAN, Band 12, Nr. 403 (E-674)[3250], 26. Oktober 1988; & JP-A-63 142 993
- PATENT ABSTRACTS OF JAPAN, Band 12, Nr. 177 (E-613), 25. Mai 1988; & JP-A-62 285 584
- PATENT ABSTRACTS OF JAPAN, Band 12, Nr. 168 (E-611)[3015], 20. Mai 1988; & JP-A-62 279 787

## Beschreibung

Die Erfindung geht aus von einer Einrichtung zur Bildaufnahme nach der Gattung des Hauptanspruchs.

Halbleiter-Bildsensoren bestehen aus vielen matrixförmig angeordneten Sensorelementen, in denen in Abhängigkeit von der jeweiligen Beleuchtungsstärke eine elektrische Ladung aufintegriert und danach als Videosignal ausgelesen wird. Durch geringe Unterschiede der Sensorelemente sowie der weiteren Strukturen der Halbleiter-Bildsensoren ist dem ausgelesenen Videosignal eine stehende Untergrundstörung überlagert, das sogenannte Fixed-pattern-noise. Die Amplitude dieser Störung ist im Verhältnis zum Videosignal umso größer, je länger die Integrationszeit ist.

Aufgabe der vorliegenden Erfindung ist es, eine Einrichtung zur Bildaufnahme anzugeben, bei welcher trotz erhöhter Integrationszeit die stehende Untergrundstörung weitgehend ausgeschlossen ist und die spektrale Empfindlichkeit eines Halbleiter-Bildsensors, die für verschiedene Frequenzbereiche unterschiedlich groß ist, mittels einfacher mechanischer Mittel an die verschiedenen Frequenzbereiche angepaßt wird.

Aus der JP-A-57 212 874 ist eine Bildaufnahmeeinheit bekannt, die ein Dunkelsignal aufnimmt, das über die gleiche Zeitdauer integriert ist, wie ein Bildsignal. Von der Bildaufnahmeeinheit wird ein Bild erzeugt, indem eine Differenz zwischen dem Bildsignal und dem Dunkelsignal gebildet wird.

Aus JP-A-63 142 993 ist eine Bildaufnahmeeinheit bekannt, bei der mittels eines Filterrades eine Bildröhre in zeitlich aufeinander folgenden Abständen mit Farbbildern belichtet wird. Dabei wird die Bildröhre mit den Primärfarben rot, grün und blau belichtet, wobei die Sektoren des Filterrades für die Aufnahme der Primärfarben gleich groß sind.

Die erfindungsgemäße Einrichtung mit den Merkmalen des Anspruchs 1 hat den Vorteil, daß mittels einfacher mechanischer Mittel die unterschiedlich große Empfindlichkeit des Halbleiter-Bildsensors für verschiedene Frequenzbereiche ausgeglichen wird. Auf diese Weise wird eine Verbesserung der Farbqualität der Bildaufnahme erzielt.

Obwohl die Erfindung in erster Linie bei der Bildaufnahme mit höheren Integrationszeiten vorgesehen ist, kann im Bedarfsfall auch eine Anwendung bei üblichen Integrationszeiten erfolgen, wie sie beispielsweise bei Videokameras vorliegen.

Durch die in den Unteransprüchen aufgeführten Maßnahmen sind vorteilhafte Weiterbildungen und Verbesserungen der im Hauptanspruch angegebenen Erfindung möglich.

Eine besonders einfache Ausführung ergibt sich bei Einrichtungen zur Bildaufnahme, bei denen ohnehin ein rotierendes Filterrad vorgesehen ist, das entsprechende lichtundurchlässige Sektoren aufweist.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines ersten Ausführungsbeispiels,
- Fig. 2: ein Filterrad,
- Fig. 3: eine Darstellung des zeitlichen Ablaufs der Signalerzeugung und -korrektur bei dem ersten Ausführungsbeispiel und
- Fig. 4: Teile der Einrichtung gemäß Fig. 1, welche im Sinne eines zweiten Ausführungsbeispiels abgewandelt sind.

Gleiche Teile sind in den Figuren mit gleichen Bezugszeichen versehen.

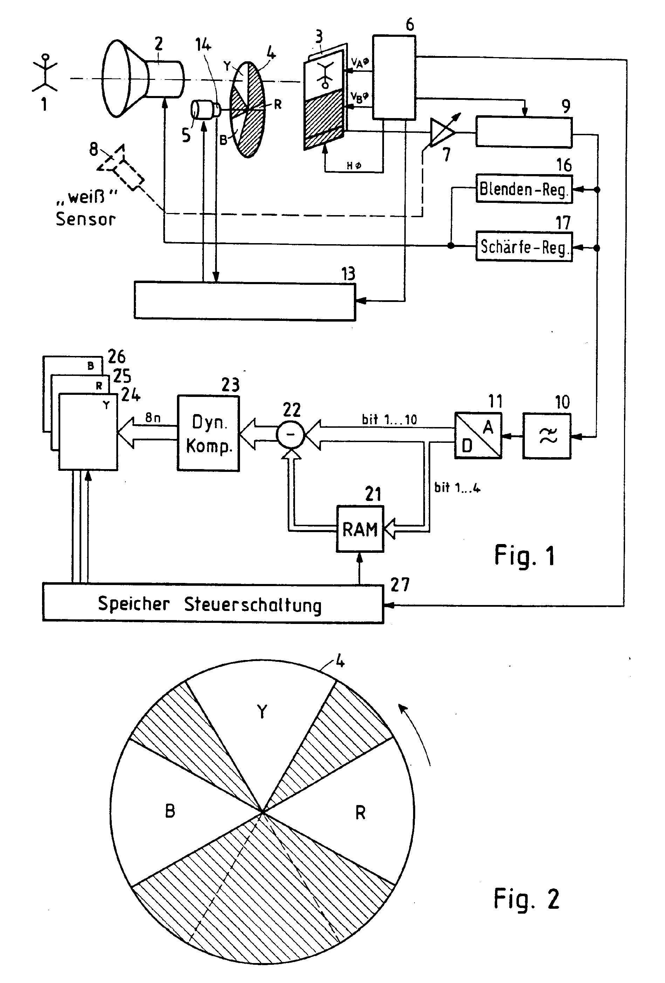

Beim dem Ausführungsbeispiel nach Fig. 1 wird ein Objekt 1 mit Hilfe eines Objektivs 2 auf die lichtempfindliche Fläche eines Halbleiter-Bildsensors 3 abgebildet. Im Strahlengang zwischen dem Objektiv 2 und dem Halbleiter-Bildsensor 3 befindet sich ein Filterrad 4, das von einem Motor 5 in Pfeilrichtung gedreht wird. Das Filterrad 4 wird bezüglich der Drehzahl und der Phasenlage starr mit einem Takt verkoppelt, der neben den zum Betrieb des Halbleiter-Bildsensors 3 erforderlichen Taktsignalen HPHI, VAPHI und VBPHI in einem Taktgenerator 6 erzeugt wird.

Das vom Halbleiter-Bildsensor 3 erzeugte Signal enthält zeitsequentiell die Farbwertsignale G, R und B. Dieses Signal wird in einem Verstärker 7 verstärkt, wobei der Verstärkungsfaktor zur Anpassung an wechselnde Lichtverhältnisse steuerbar ist. So kann beispielsweise der Verstärkungsfaktor von einem Signal eines Weißsensors 8 gesteuert werden.

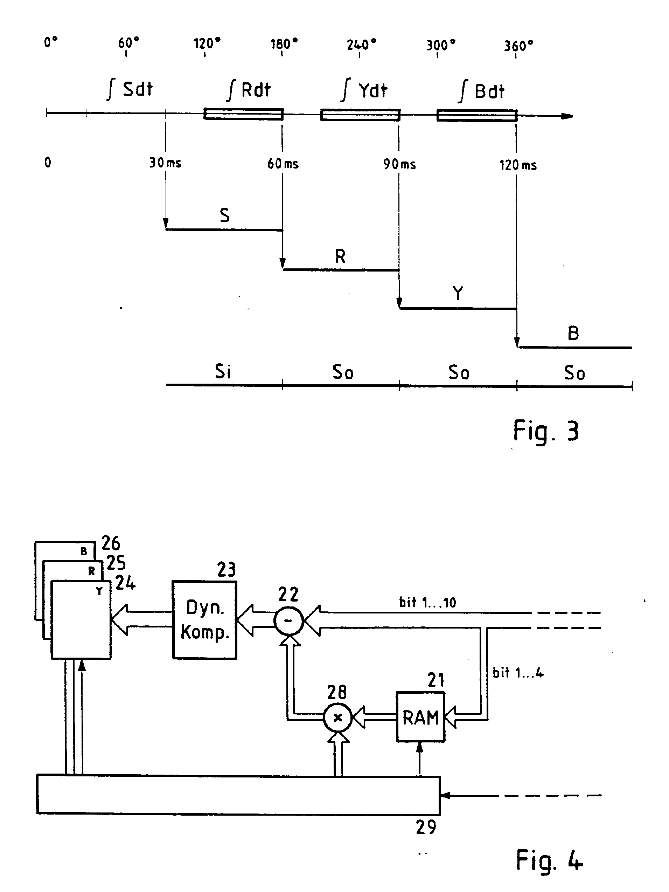

An den Verstärker 7 schließen sich eine Schaltung 9, die im wesentlichen zur Gradationsvorverzerrung dient, ein Tiefpaß 10 und ein Analog/Digital-Wandler 11 an. Der Tiefpaß 10 ist in an sich bekannter Weise zur Vermeidung von Alias-Störungen bei der Analog/Digital-Wandlung erforderlich. Da die drei Signale G, R und B als Zeit-Multiplexsignal vorliegen, ist im Gegensatz zu einer dreikanaligen Farbfernsehkamera jede der Schaltungen 7, 9, 10 und 11 nur einmal erforderlich. Die Baugruppen 21 bis 27 werden später nach der Beschreibung der Figuren 2 und 3 erläutert.

Eine von dem Taktgeber 6 synchronisierte Steuerschaltung 13 steuert die Drehzahl des Motors 5, wozu in an sich bekannter Weise von einem Winkelgeber 14 eine Rückmeldung an die Steuerschaltung 13 erfolgt. An sich bekannte Schaltungen 16, 17 zur Blendenregelung und zur Schärferegelung leiten aus den Videosignalen Stellsignale ab, die entsprechenden Stellgliedern des Objektivs zugeführt werden.

Das in Fig. 2 dargestellte Filterrad 4 umfaßt jeweils einen Sektor für das Leuchtdichtesignal Y und die Farbwertsignale R und B und dazwischen angeordnete lichtundurchlässige Sektoren, die schraffiert dargestellt sind. Bei dem Ausführungsbeispiel sind die Sektoren für das Leuchtdichtesignal Y und für die Farbwertsignale R und B gleich groß. Sie können im Rahmen der Erfindung jedoch auch verschieden groß gewählt werden. So ist beispielsweise die Erzeugung eines Leuchtdichtesignals mit höherer Auflösung in der von der Anmelderin früher eingereichten Anmeldung EP-A-0 324 107, veröffentlicht am 19.7.1989, beschrieben worden. Dabei ist ein größerer Sektor für das Leuchtdichtesignal vorteilhaft.

Im Sinne einer Angleichung der Störabstände der Farbwertsignale kann jedoch auch der Sektor für das Farbwertsignal B gegenüber den anderen vergrößert werden, so daß bei einer Belichtung mit Normal-Weiß das Leuchtdichtesignal und die Farbwertsignale gleiche Amplituden aufweisen. Ferner kann anstelle des Sektors für das Leuchtdichtesignal Y ein Sektor für das Farbwertsignal G vorgesehen sein.

Fig. 3 stellt die zeitliche Abfolge dar, nach welcher die Belichtung des Halbleiter-Bildsensors und das Auslesen der Signale bei Verwendung des Filterrades nach Fig. 2 erfolgen. Eine Umdrehung des Filterrades erfolgt beispielsweise in 120 ms. Während der Zeit von 0 bis 30 ms wird der Halbleiter-Bildsensor nicht belichtet. Es wird jedoch eine Integration der Untergrund-Störsignale S (fixed pattern noise) durchgeführt. Bei dem verwendeten Halbleiter-Bildsensor nach dem sogenannten Frame-transfer-Prinzip werden am Ende der Integrationszeit die Ladungen der einzelnen Sensorelemente in entsprechende Speicher übertragen, die sich auf einer weiteren Fläche des Halbleiter-Bildsensors befinden. Dieser Vorgang ist in Fig. 3 durch senkrechte Pfeile dargestellt. Nach der Übertragung beginnt das getaktete Auslesen des jeweiligen Signals - im Falle des Störsignals S während der Zeit zwischen 30 ms und 60 ms.

Nach der Übertragung der Ladungen, welche das Signal S bilden, wird der Halbleiter-Bildsensor zunächst noch 10 ms lang abgedunkelt und dann für 20 ms mit dem Rotauszug belichtet. Danach erfolgt bei 60 ms bzw. bei einem Winkel von 180° die Übertragung der integrierten Ladungen, worauf das Auslesen des Farbwertsignals R beginnt. In ähnlicher Weise werden das Leuchtdichtesignal Y und das Farbwertsignal B erzeugt. Das Signal S wird beim Auslesen aus dem Halbleiter-Bildsensor 3 in digitaler Form als Signal Si in den Speicher 21 eingeschrieben. Zur Korrektur wird dieses Signal als So jeweils synchron mit den Signalen R, Y und B aus dem Speicher 21 ausgelesen und von den Signalen R, Y bzw. B in der Subtraktionsschaltung 22 subtrahiert.

Da das Signal S eine wesentlich kleinere Amplitude als die Signale R, Y und B aufweist, genügen bei dem Ausführungsbeispiel vier Binärstellen (bit 1 bis bit 4) für die Darstellung des Signals S. Dementsprechend ist der Speicher 21 ausgelegt. Im Gegensatz dazu ist für die Signale R, Y und B eine feinere Quantisierung von beispielsweise 10 bit vorgesehen, welche im Anschluß an die Subtraktion in einem Dynamik-Kompressor 23 auf 8 bit reduziert wird. Die sequentiell auftretenden Signale R, Y und B werden in jeweils einem Bildspeicher 24, 25, 26 zwischengespeichert und können aus diesen simultan ausgelesen und in an sich bekannter Weise zur weiteren Verwendung bzw. Übertragung codiert und/oder digital/analog-gewandelt werden. Eine Speichersteuerschaltung 27 steuert die Schreib- und Lesevorgänge des Speichers 21 und der Bildspeicher 24 bis 26.

Bei dem Ausführungsbeispiel gemäß Fig. 4, das im übrigen demjenigen nach Fig. 1 gleicht, ist zwischen den Speicher 21 und die Subtrahierschaltung 22 eine Multiplizierschaltung 28 geschaltet, welche die aus dem Speicher 21 ausgelesenen Signale mit Faktoren bewertet, die von der Steuerschaltung 29 zugeführt werden. Diese Bewertung ist vorteilhaft, wenn die Integrationszeiten für die Signale R, Y und B verschieden von der für das Signal S maßgeblichen Integrationszeit sind.

## Patentansprüche

1. Einrichtung zur Bildaufnahme, wobei die jeweils aufzunehmenden Gegenstände auf einen Halbleiterbildsensor mit rasterförmig angeordneten Sensorelementen abgebildet werden und die in den Sensorelementen entstehenden Ladungen nach Ablauf einer Integrationszeit als Videosignale ausgelesen werden, wobei bei nichtbelichtetem Halbleiterbildensor (3) Korrektursignale ausgelesen und gespeichert werden und die Korrektursignale zur Korrektur der Videosignale, die bei belichtetem Halbleiterbildsensor (3) ausgelesen werden, verwendet werden, dadurch gekennzeichnet, daß ein Filterrad (4) mit Sektoren zur sequentiellen Belichtung des Halbleiterbildsensors (3) mit mehreren Farbauszügen vorgesehen ist, daß die Sektoren für die Farbwertsignale derart ausgebildet sind, daß die Farbwertsignale gleiche Amplituden aufweisen.

2. Einrichtung nach Anspruch 1, dadurch gekennzeichnet, daß die Korrektur durch Subtraktion der Korrektursignale von den Videosignalen erfolgt.

3. Einrichtung nach Anspruch 1, dadurch gekennzeichnet, daß die Zeiten, in welchen der Halbleiter-Bildsensor (3) unbelichtet ist, an die jeweils folgenden Belichtungszeiten angepaßt sind.

4. Einrichtung nach Anspruch 1, dadurch gekennzeichnet, daß die Zeiten, in welchen der Halbleiter-Bildsensor (3) unbelichtet ist, mindestens teilweise von den jeweils folgenden Belichtungszeiten abweichen und daß die Korrektursignale entsprechend den Abweichungen bewertet werden.

5. Einrichtung nach Anspruch 1, dadurch gekennzeichnet, daß die Vorrichtung zur Belichtung ein rotierendes Filterrad (4) ist, welches mehrere lichtundurchlässige Segmente und mehrere verschiedenfarbige Segmente aufweist.

6. Einrichtung nach Anspruch 1, dadurch gekennzeichnet, daß Ausgangssignale des Halbleiter-Bildsensors nach geeigneter Verstärkung und Tiefpaßfilterung einem Analog/Digital-Wandler (11) zuführbar sind, an dessen Ausgang Eingänge einer Subtrahierschaltung (22) und eines Speichers (21) angeschlossen sind, daß ein Ausgang des Speichers (21) mit einem weiteren Eingang der Subtrahierschaltung (22) verbunden ist und daß vom Ausgang der Subtrahierschaltung (22) die korrigierten Videosignale abnehmbar sind.

7. Einrichtung nach Anspruch 6, dadurch gekennzeichnet, daß der Speicher mit einer Steuerschaltung (27, 29) verbunden ist, welche synchron mit einer Vorrichtung (4) zur Steuerung der Belichtung den Speicher (21) zwischen Schreibund Lesebetrieb umschaltet.

8. Einrichtung nach einem der Ansprüche 1 und 7, dadurch gekennzeichnet, daß dem Speicher eine Multiplizierschaltung (28) zugeordnet ist, die von der Steuerschaltung (29) derart gesteuert wird, daß die Korrektursignale mit für jeweils einen Farbauszug gültigen Faktoren bewertet werden.

9. Einrichtung nach Anspruch 6, dadurch gekennzeichnet, daß von den acht bis zehn Binärstellen umfassenden Ausgangssignalen des Analog/Digital-Wandlers nur einige, vorzugsweise vier, geringstwertige Binärstellen dem Speicher (21) zuführbar sind.

## Claims

1. Image pick-up device, the objects respectively to be recorded being imaged on a semiconductor image sensor having sensor elements arranged in the form of a matrix, and the charges produced in the sensor elements being read out as video signals after the expiry of an integration time, correction signals being read out and stored when the semiconductor image sensor (3) is not exposed, and the correction signals being used to correct the video signals which are read out when the semiconductor image sensor (3) is exposed, characterized in that a filter wheel (4) is provided with sectors for sequentially exposing the semiconductor image sensor (3) with a plurality of colour separations, and in that the sectors for the chrominance signals are constructed in such a way that the chrominance signals have the same amplitudes.

2. Device according to Claim 1, characterized in that the correction is performed by subtracting the correction signals from the video signals.

3. Device according to Claim 1, characterized in that the times in which the semiconductor image sensor (3) is not exposed are adapted to the respectively following exposure times.

4. Device according to Claim 1, characterized in that the times in which the semiconductor image sensor (3) is not exposed deviate at least partially from the respectively following exposure times, and in that the correction signals are evaluated in accordance with the deviations.

5. Device according to Claim 1, characterized in that the exposure device is a rotating filter wheel (4) which has a plurality of opaque segments and a plurality of heterochromatic segments.

6. Device according to Claim 1, characterized in that the output signals of the semiconductor image sensor can be fed after suitable amplification and low-pass filtering to an analog-to-digital converter (11) to whose output inputs of a subtracter circuit (22) and of a memory (21) are connected, in that an output of the memory (21) is connected to a further input of the subtracter circuit (22), and in that the corrected video signals can be tapped at the output of the subtracter circuit (22).

7. Device according to Claim 6, characterized in that the memory is connected to a control circuit (27, 29) which switches the memory (21) over between write mode and read mode in a fashion synchronous with a device (4) for controlling the exposure.

8. Device according to one of Claims 1 and 7, characterized in that the memory is assigned a multiplication circuit (28) which is controlled by the control circuit (29) in such a way that the correction signals are evaluated by means of factors valid for in each case one colour separation.

9. Device according to Claim 6, characterized in that of the output signals, comprising eight to ten bit positions, of the analog-to-digital converter only a few, preferably four, least significant bit positions can be fed to the memory (21).

## Revendications

1. Dispositif de prise d'image qui donne d'un objet une image sur un capteur d'image à semi-conducteurs, comportant des éléments de capteur répartis suivant une forme de grille, et les charges créées dans les éléments de capteur sont extraites comme signaux vidéo à la fin d'un temps d'intégration, des signaux de correction étant lus et enregistrés lorsque le capteur d'image à semi-conducteurs n'est pas éclairé, et ces signaux de correction étant utilisés pour corriger les signaux vidéo obtenus lorsque le capteur d'image à semi-conducteurs (3) est éclairé, caractérisé par une roue de filtre (4) avec des secteurs pour l'éclairage séquentiel du capteur d'image à semiconducteurs (3) avec plusieurs couleurs primaires, les secteurs pour ces signaux des couleurs primaires étant réalisés pour que les signaux des couleurs primaires présentent la même amplitude.

2. Dispositif selon la revendication 1, caractérisé en ce que la correction se fait par soustraction des signaux de correction à partir des signaux vidéo.

3. Dispositif selon la revendication 1, caractérisé en ce que les temps pendant lesquels le capteur d'image à semi-conducteurs (3) n'est pas éclairé sont adaptés aux temps d'éclairement qui suivent respectivement.

4. Dispositif selon la revendication 1, caractérisé en ce que les temps pendant lesquels le capteur d'image à semi-conducteurs (3) n'est pas éclairé diffèrent au moins partiellement des temps d'éclairement respectifs suivants et en ce que les signaux de correction sont exploités suivant les différences.

5. Dispositif selon la revendication 1, caractérisé en ce que le dispositif pour l'éclairement est une roue de filtre (4), rotative, comportant plusieurs segments transparents et plusieurs segments de couleurs différentes.

6. Dispositif selon la revendication 1, caractérisé en ce que les signaux de sortie du capteur d'image à semi-conducteurs sont appliqués, après une amplification appropriée et un passage par un filtre passe-bas, à un convertisseur analogique/numérique (11) dont la sortie est reliée aux entrées d'un circuit de soustraction (22) et d'une mémoire (21), une sortie de la mémoire (21) étant reliée à une autre entrée du circuit de soustraction (22) et la sortie du circuit de soustraction (22) fournit les signaux vidéo corrigés.

7. Dispositif selon la revendication 6, caractérisé en ce que la mémoire est reliée à un circuit de commande (27, 29) qui commute en synchronisme avec un dispositif (4) commandant la mémoire (21) entre le mode d'enregistrement et le mode de lecture pour commander l'éclairement.

8. Dispositif selon l'une des revendications 1 et 7, caractérisé en ce qu'un circuit multiplicateur (28) est associé à la mémoire, ce circuit étant commandé par le circuit de commande (29) pour que les signaux de correction soient exploités par des coefficients valables respectivement pour une couleur primaire.

9. Dispositif selon la revendication 6, caractérisé en ce que les signaux de sortie comprennent entre huit et dix positions binaires du convertisseur analogique/numérique, mais seulement certaines positions binaires, de préférence quatre positions, celles des valeurs les plus faibles sont appliquées à la mémoire (21).
